Europäisches Patentamt

European Patent Office

Office européen des brevets

(11) Numéro de publication: **0 337 545**
**A1**

## (12) DEMANDE DE BREVET EUROPEEN

(21) Numéro de dépôt: **89200859.0**

(22) Date de dépôt: **06.04.89**

(51) Int. Cl.⁴: **H04L 11/12 , H04L 1/20**

(30) Priorité: **12.04.88 FR 8804808**

(43) Date de publication de la demande:
**18.10.89 Bulletin 89/42**

(84) Etats contractants désignés:
**BE DE FR GB IT SE**

(71) Demandeur: **TELECOMMUNICATIONS RADIOELECTRIQUES ET TELEPHONIQUES T.R.T.**
**88, rue Brillat Savarin**
**F-75013 Paris(FR)**

(72) Inventeur: **Pouzoullic, Gérard**
**SOCIETE CIVILE S.P.I.D. 209 rue de l'Université**
**F-75007 Paris(FR)**

(74) Mandataire: **Chaffraix, Jean et al**
**Société Civile S.P.I.D. 209, rue de l'Université**
**F-75007 Paris(FR)**

(54) **Dispositif de mesure et d'annulation de la distorsion biaise des signaux binaires du type ne comportant pas de composante spectrale à la fréquence zéro.**

(57) Ce dispositif effectue automatiquement et cycliquement la mesure de la distorsion (DM) par analyses successives des données binaires à une fréquence d'échantillonnage (SCK) multiple de la fréquence des données en déterminant le signe et la valeur quantifiée de la distorsion (UDC). Il comporte des moyens d'annulation (CC) de la distorsion qui augmentent la durée des éléments binaires sélectivement en fonction du signe de la distorsion et proportionnellement à la valeur quantifiée de ladite distorsion et ceci jusqu'à sa complète annulation.

Application : Dispositif de mesure et de correction de la distorsion biaise de signaux numériques.

FIG. 2

## DISPOSITIF DE MESURE ET D'ANNULATION DE LA DISTORSION BIAISE DES SIGNAUX BINAIRES DU TYPE NE COMPORTANT PAS DE COMPOSANTE SPECTRALE A LA FREQUENCE ZERO.

La présente invention concerne un dispositif de mesure de la distorsion biaise présente dans des signaux binaires élaboré autour de moyens de comptage comptant les éléments binaires pendant une période de mesure déterminée par une horloge de comptage.

Un tel dispositif de mesure de la distorsion biaise également appelée distorsion asymétrique est décrit dans le brevet anglais No 1 585 121. Comme lors de la transmission de signaux binaires sur des distances importantes, il arrive couramment que ces signaux soient reçus entachés de distorsion biaise, une mesure de cette distorsion doit être effectuée. Le dispositif de mesure connu de la demande de brevet précitée est ainsi conçu pour la mesure de cette distorsion. Une horloge de comptage est ajustée pour fournir à des moyens de comptage un nombre préfixé d'impulsions d'horloge par élément binaire. L'arrivée d'un front positif ou négatif du signal binaire remet à zéro le contenu d'un compteur qui recommence alors à compter les impulsions d'horloge jusqu'au prochain front de sens opposé du signal binaire. Après un nombre déterminé de répétitions d'une telle séquence une moyenne est établie et affichée au moyen d'une rangée de lampes. Ce dispositif présente un premier inconvénient qui est relatif à la nécessité d'ajuster l'horloge de comptage pour rechercher le synchronisme avec les signaux binaires à mesurer. Un second inconvénient apparaît du fait que l'affichage au moyen d'une rangée de lampes de l'information de distorsion est peu précis, il ne donne pas de valeur quantifiée de la distorsion mesurée et ainsi ne peut être directement et aisément exploité lorsqu'une correction automatique est désirée.

L'invention a pour but de remédier efficacement à ces inconvénients et propose de plus un moyen de correction de ce type de distorsion pour des signaux binaires du type ne comportant pas de composante spectrale à la fréquence zéro.

Pour cela le dispositif de mesure de la distorsion biaise du genre mentionné dans le préambule est remarquable en ce que pour des signaux binaires du type ne comportant pas de composante spectrale à la fréquence zéro, c'est à dire comportant autant d'éléments binaires à l'état "0" que d'éléments binaires à l'état "1" il effectue automatiquement par asservissement d'une part, la mesure de la distorsion biaise par analyses successives desdits signaux binaires dont les éléments binaires sont échantillonnés à une fréquence multiple de la fréquence des signaux analysés pour déterminer, pour un nombre d'échantillons significatifs comptés par les moyens de comptage pendant la période de mesure déterminée, le signe et la valeur quantifiée de la distorsion et d'autre part la correction de ladite distorsion par l'intermédiaire de moyens d'annulation de la distorsion biaise qui lui sont à cet effet associés en augmentant la durée des éléments binaires proportionnellement à la valeur quantifiée de la distorsion mesurée, le signe des éléments binaires dont la durée est à augmenter étant déterminé par le signe de la distorsion mesurée, les signaux ainsi corrigés étant alors réanalysés et de nouveau corrigés si besoin est jusqu'à l'annulation de leur distorsion. Le fait d'opérer avec une fréquence d'échantillonnage dont la valeur est multiple de celle de la fréquence des signaux analysés est avantageux dans le sens qu'un tel dispositif peut être utilisé quels que soient les débits binaires. De plus l'information de distorsion étant une valeur quantifiée autorise à un affichage précis, cette valeur étant en outre exploitée pour corriger et annuler le défaut de distorsion de manière automatique.

Les dispositifs de mesure de la distorsion biaise sont couramment employés pour des applications concernant la télégraphie, cependant le dispositif selon l'invention est également particulièrement bien adapté pour être utilisé dans des modems pour y mesurer et annuler ce type de distorsion dans des signaux binaires du genre précité. En effet, une liaison utilisant un mode de transmission en bande de base est constituée par un émetteur, une ligne et un récepteur, le récepteur comportant des moyens d'égalisation du signal de données reçu par exemple constitués par un égaliseur de ligne. L'émetteur convertit les données logiques à transmettre en un code donné et les envoie au récepteur sur la ligne (cable bifilaire). Cette ligne, qui n'est jamais parfaite, atténue plus ou moins les composantes spectrales du signal selon une loi en $1/\sqrt{F}$ et peut être assimilée, avec une assez bonne approximation, à un filtre passe-bas. Le récepteur doit alors amplifier les composantes atténuées selon la courbe inverse pour restituer les données émises. En outre, la présence de transformateurs, condensateurs, etc..., a pour effet de supprimer le courant continu et les très basses fréquences. Ainsi de préférence, le code utilisé ne doit pas comporter de composante spectrale à la fréquence zéro, c'est pourquoi un code biphase est couramment utilisé. Dans le récepteur du modem est ainsi inséré un égaliseur de ligne qui corrige les distorsions de la ligne téléphonique. Cependant dans certaines conditions de fonctionnement, et ce qui suit est vrai pour tout égaliseur, une distorsion biaise peut subsister. C'est ainsi que, en limite de fonctionnement d'un égaliseur, c'est à dire lorsque le signal reçu a été transmis sur une ligne très longue, ledit signal devient difficile à corriger, une composante continue apparaît ce qui traduit donc la présence d'une distorsion biaise et lorsque cette distorsion biaise dépasse 50 %, des erreurs sont engendrées et le modem cesse de fonctionner. Pour éviter ce genre d'inconvénient, il suffit de connecter à la sortie de l'égaliseur de ligne le dispositif selon l'invention qui permet de la sorte de mesurer et d'annuler la distorsion biaise présente à la sortie de l'égaliseur. De cette manière le dispositif de mesure et d'annulation de la distorsion biaise apporte une correction additionnelle qui permet d'augmenter encore la portée du signal de quelques dB et d'améliorer ainsi sensiblement les performances du modem. Un schéma d'un modem en bande de base est donné par exemple page 129 dans "Les modems pour transmission de données" de Michel Stein dans la "Collection technique et scientifique des télécommunications" chez MASSON. Sur ce schéma le dispositif de mesure et d'annulation de la distorsion biaise selon l'invention serait inséré entre l'égaliseur et l'amplificateur limiteur qui est suivi des circuits d'échantillonnage et de décodage.

La description suivante en regard des dessins annexés, le tout donné à titre d'exemple, fera bien comprendre comment l'invention peut être réalisée.

La figure 1 donne l'allure de signaux codés en biphase avec et sans distorsion biaise et des horloges nécessaires à la réalisation de l'invention.

La figure 2 représente un schéma synoptique d'un dispositif de mesure et d'annulation de la distorsion biaise selon l'invention.

La figure 3 donne un exemple de réalisation du dispositif de mesure et d'annulation de la distorsion biaise.

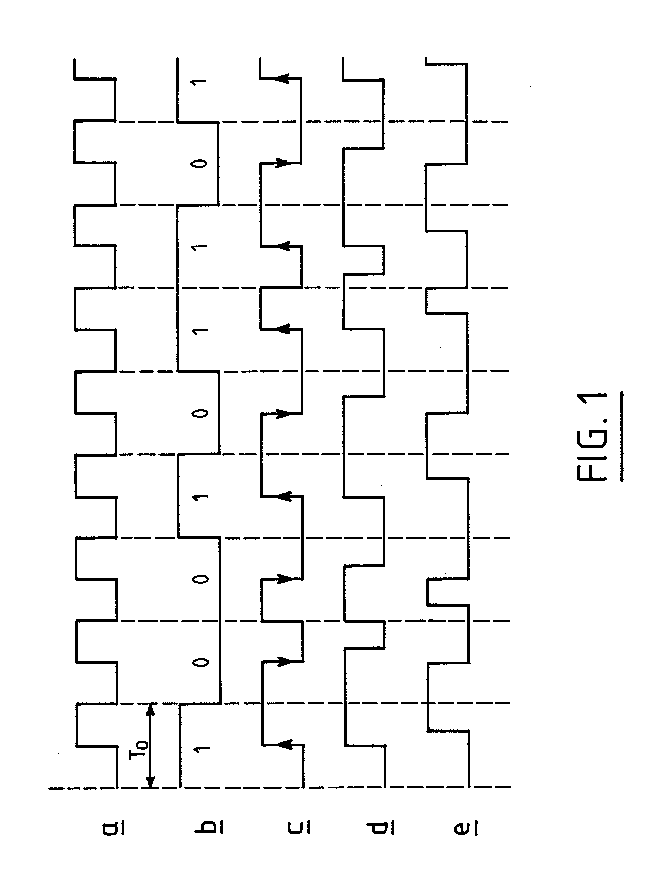

Sur la figure 1 sont représentés différents signaux présents ou susceptibles d'être présents aux entrées du dispositif de mesure et d'annulation de la distorsion biaise.

L'horloge des données de fréquence Fo et de période To est représentée à la ligne a.

A la ligne b est proposé un exemple de signal à émettre par exemple vers le récepteur d'un modem avec la séquence binaire correspondante.

A la ligne c est représenté le signal à émettre codé en biphase tel qu'il est reçu à l'entrée du dispositif de mesure et d'annulation de la distorsion biaise lorsqu'il n'est pas entaché de distorsion biaise. Il est rappelé que l'état "1" d'une donnée codée en biphase est codé par une transition positive et l'état "0" d'une donnée est codé par une transition négative, ce qui signifie qu'un bit "1" est codé par un état "0" suivi d'un état "1" et qu'un bit "0" est codé par un état "1" suivi d'un état "0". Il résulte de cela que le signal émis en ligne comporte autant de "1" que de "0" et qu'ainsi la composante continue d'un signal codé en biphase est nulle.

A la ligne d est représenté le signal émis tel qu'il est reçu à l'entrée du dispositif de mesure et d'annulation de la distorsion biaise lorsqu'il est entaché de distorsion biaise dite positive, c'est-à-dire lorsque la durée d'un "1" est privilégiée par rapport à celle d'un "0".

A la ligne e, à l'inverse, est représenté le signal émis tel qu'il est reçu à l'entrée du dispositif de mesure et d'annulation de la distorsion biaise lorsqu'il est entaché de distorsion biaise dite négative c'est à dire lorsque la durée d'un "0" est privilégiée par rapport à celle d'un "1".

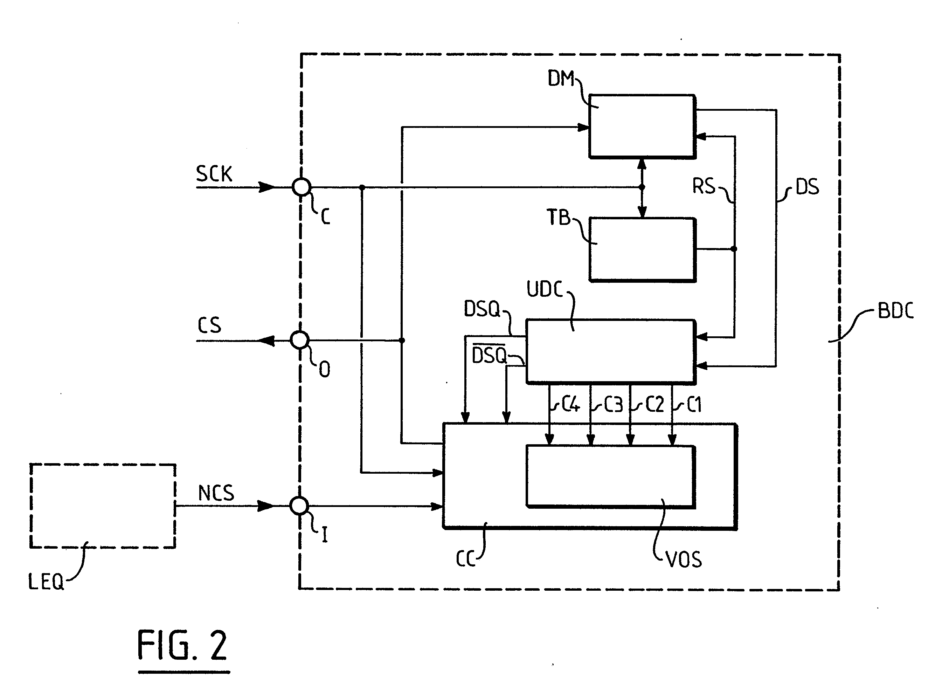

Sur la figure 2 est proposé un schéma synoptique d'un dispositif de mesure et d'annulation de la distorsion biaise BDC selon l'invention.

Le dispositif de mesure de la distorsion biaise présente dans des signaux binaires est élaboré autour de moyens de comptage comptant les éléments binaires pendant une période de mesure déterminée par une horloge de comptage, il est remarquable en ce que pour des signaux binaires du type ne comportant pas de composante spectrale à la fréquence zéro, c'est à dire comportant autant d'éléments binaires à l'état "0" que d'éléments binaires à l'état "1", il effectue automatiquement par asservissement d'une part, la mesure de la distorsion biaise par analyses successives desdits signaux binaires dont les éléments binaires sont échantillonnés à une fréquence multiple de la fréquence des signaux analysés pour déterminer, pour un nombre d'échantillons significatifs comptés par les moyens de comptage pendant la période de mesure déterminée, le signe et la valeur quantifiée de la distorsion et d'autre part la correction de ladite distorsion par l'intermédiaire de moyens d'annulation de la distorsion biaise qui lui sont à cet effet associés en augmentant la durée des éléments binaires proportionnellement à la valeur quantifiée de la distorsion mesurée, le signe des éléments binaires dont la durée est à augmenter étant déterminé par le signe de la distorsion mesurée, les signaux ainsi corrigés étant alors réanalysés et de nouveau corrigés si besoin est jusqu'à l'annulation de leur distorsion.

Selon une application préférée mais non limitative le dispositif BDC est connecté à la sortie d'un égaliseur de ligne LEQ. L'égaliseur LEQ et le dispositif BDC forment ainsi un dispositif de correction automatique des distorsions de la ligne de transmission. Il est bien évident que le dispositif de mesure et d'annulation de la distorsion biaise BDC peut être connecté à la sortie de n'importe quel type d'égaliseur, la seule condition exigée pour le bon fonctionnement du dispositif BDC, étant que le code utilisé comporte autant de "1" que de "0", comme par exemple tous les codes biphases.

Le signal égalisé peut être, comme cela a été vu précédemment, entaché de distorsion biaise. Ce signal NCS non corrigé de cette distorsion, présent à la sortie de l'égaliseur LEQ, est appliqué à l'entrée I du dispositif BDC. L'entrée I est connectée à une entrée d'un circuit de correction CC. C'est dans ce circuit CC que le signal NCS après analyse est corrigé par asservissement. Le signal NCS est en fait corrigé par analyses successives jusqu'à ce que la distorsion biaise soit annulée. Le temps de convergence ou le temps nécessaire pour annuler la distorsion biaise est fonction de la fréquence d'échantillonnage choisie pour analyser le signal. La fréquence d'échantillonnage doit être suffisamment élevée pour que le signal soit analysé finement, cependant si cette fréquence est choisie trop élevée, le temps de convergence tend vers une valeur exagérée. Afin de concilier de telles exigences un compromis est nécessaire. Ainsi la fréquence d'échantillonnage a été choisie égale à 32 Fo, cette valeur qui n'est en aucun cas limitative donne entière satisfaction et est aisée à obtenir à partir par exemple de l'horloge d'un modem. Cette horloge d'échantillonnage référencée SCK est appliquée à l'entrée C du dispositif BDC. De l'entrée C, l'horloge SCK est distribuée vers les différents circuits du dispositif BDC et notamment vers le circuit de correction CC.

Selon une application préférée du dispositif de l'invention les moyens de comptage sont composés d'un circuit de mesure de la distorsion et d'un circuit compteur de corrections, le circuit de mesure de la distorsion constitué d'un compteur binaire analysant le signal au rythme de la fréquence d'échantillonnage et discriminant le signe de la distorsion pour une période de mesure déterminée et le circuit compteur de corrections constitué d'un compteur-décompteur donnant le signe et la valeur quantifiée de la distorsion biaise.

Le signal de données sortant du circuit de correction CC est transmis d'une part vers la borne de sortie 0 du dispositif BDC et d'autre part vers une entrée d'un circuit de mesure de distorsion DM pour y être analysé (il est rappelé que la correction est faite par analyses successives). Le signal de sortie CS corrigé ou en voie d'être corrigé est donc disponible à la sortie 0 du dispositif BDC où il peut être avantageusement exploité. Ainsi, si le dispositif BDC est utilisé et donc inséré dans le récepteur d'un modem en bande de base, le signal de sortie CS est transmis vers l'amplificateur limiteur puis vers les circuits d'échantillonnage et de décodage traditionnellement placés après l'égaliseur de ligne.

Le circuit de mesure de distorsion DM reçoit également sur une deuxième entrée l'horloge d'échantillonnage SCK. La mesure de la distorsion s'effectue par exemple sur une suite de 16 bits de données, donc dans ce cas sur 32 éléments binaires. Si T est la durée d'un de ces éléments binaires, l'horloge d'échantillonnage SCK = 32Fo, qui échantillonne le signal de données distordu, est alors égale à T/16. Le circuit de mesure DM dispose d'un compteur, par exemple un diviseur de fréquence par 512, qui est incrémenté d'une unité chaque fois que l'état "1" est échantillonné. Lorsqu'il n'y a pas de distorsion biaise, il est échantillonné autant de "1" que de "0", soit sur 32 éléments binaires, 256 états "1" et 256 états "0", le compteur affiche alors la valeur 256. Si par contre la distorsion biaise est négative, le compteur affiche une valeur inférieure à 256. Enfin si la distorsion biaise est positive la valeur affichée par le compteur est supérieure à 256. Il est ainsi détecté le signe DS (encore appelé polarité) de la distorsion.

Selon une application préférée du dispositif de l'invention l'horloge de comptage est une base de temps constituée d'un compteur binaire comptant au rythme de la fréquence d'échantillonnage pendant une période de mesure déterminée et d'un circuit de remise à zéro pour remettre à zéro les moyens de comptage au bout de la période de mesure déterminée.

Ainsi pour élaborer chaque cycle de mesure, il est utilisé une base de temps TB fonctionnant au rythme de la fréquence d'échantillonnage SCK. La base de temps TB est par exemple constituée d'un compteur par 512 et d'un circuit de remise à zéro. Lorsque 512 périodes de la fréquence d'échantillonnage SCK sont comptées le signe de la distorsion est mesuré, le test s'étant donc bien effectué sur 32 éléments binaires, un signal de remise à zéro RS est émis d'une part vers une entrée du circuit de mesure DM et d'autre part vers une entrée d'un circuit compteur de corrections UDC.

Le résultat de chaque mesure, c'est à dire le signe de la distorsion DS est transmis vers une seconde entrée du circuit compteur de corrections UDC. Le circuit UDC est par exemple un compteur décompteur à 16 positions qui est incrémenté lorsque le signe de la distorsion DS est positif ou décrémenté lorsque le signe DS est négatif.

Selon une application préférée du dispositif de l'invention les moyens d'annulation associés au dispositif de mesure de la distorsion sont composés d'un circuit de correction comportant un circuit monostable à une durée variable constitué d'un compteur chargé à la valeur quantifiée de la distorsion pour augmenter la durée des éléments binaires affectés de distorsion biaise proportionnellement à la valeur quantifiée de la distorsion en accord avec le signe de la distorsion, la sortie du circuit de correction recopiant les signaux binaires après remise en forme et correction de la distorsion.

Le contenu du compteur UDC est chargé en mode parallèle (C1, C2, C3, C4 dans le cas d'un compteur décompteur à 16 positions) dans un circuit monostable à durée variable VOS contenu dans le circuit de correction CC. Ce circuit VOS fournit des impulsions dont la durée est proportionnelle à la valeur contenue dans le compteur de corrections UDC et donc proportionnelle à la valeur de la distorsion biaise. Le signe de la distorsion est détecté dans le circuit de correction CC au moyen des signaux DSQ et $\overline{DSQ}$ émis par le compteur de corrections UDC. Ainsi le circuit monostable VOS permet de corriger le signal distordu en prolongeant les "1" ou les "0" selon le signe de la distorsion.

Le signal CS ainsi corrigé ou en voie de l'être est réanalysé dans le circuit de mesure de distorsion DM. Le système est ainsi asservi, les corrections s'effectuant tant que la distorsion n'est pas annulée. En outre, lorsque le signal est corrigé, la valeur de la distorsion mesurée peut être connue et affichée, cette valeur étant contenue sous forme binaire dans le compteur de corrections UDC.

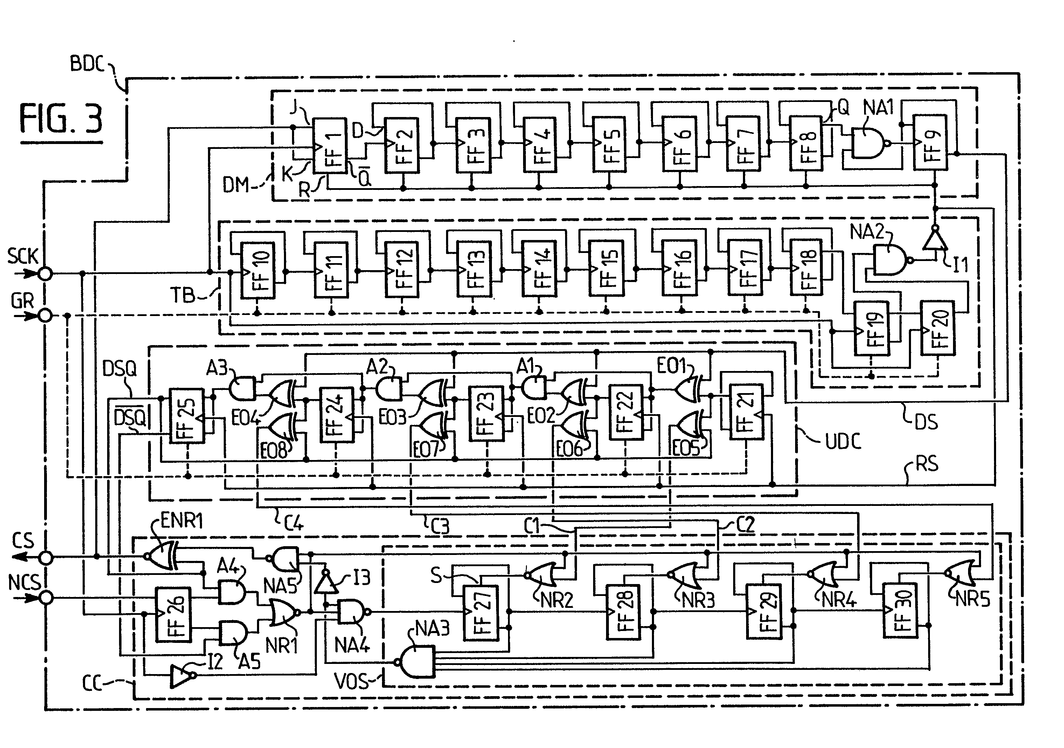

Sur la figure 3 est proposé un exemple de réalisation du dispositif de mesure et d'annulation de la distorsion biaise BDC. Bien que non limité à cette application spécifique, le dispositif BDC est particulièrement bien adapté à la mesure et l'annulation de la distorsion biaise susceptible d'être présente à la sortie d'un égaliseur de ligne d'un récepteur d'un modem en bande de base opérant sur des signaux numériques du type ne comportant pas de composante spectrale à la fréquence zéro, notamment tels que des signaux codés selon les codes biphases. En effet, le dispositif ci-dessous décrit a été avantageusement testé dans cette configuration en donnant entière satisfaction.

Dans cet exemple de réalisation non limitatif, le circuit de mesure de la distorsion DM est réalisé au moyen d'un compteur asynchrone modulo $2^n$ à n = 9 étages, utilisant le principe d'un diviseur de fréquence par 512 ($2^9$). Neuf bascules FF1 à FF9 sont montées en cascade. La bascule FF1 est du type JK les entrées J et K étant reliées entre elles (formant une bascule de type T) et recevant le signal CS alors que l'horloge d'échantillonnage SCK est appliquée à l'entrée d'horloge de ladite bascule FF1. Les bascules FF2 à FF9 sont du type D. La sortie $\overline{Q}$ de la bascule FF1 est reliée à l'entrée d'horloge de la bascule suivante FF2. Pour les bascules de FF3 à FF7 et pour un indice i variant de 2 à 7 la sortie $\overline{Q}$ d'une bascule FFi est d'une part reliée à son entrée D et d'autre part reliée à l'entrée d'horloge de la bascule suivante FFi + 1. La sortie $\overline{Q}$ de la bascule FF8 est reliée également à son entrée D. La sortie Q de la bascule FF8 est reliée à une première entrée d'une porte NA1 de type NON-ET à 2 entrées dont la seconde entrée est reliée à la sortie $\overline{Q}$ de la bascule FF9. La sortie de la porte NA1 est reliée à l'entrée d'horloge de la bascule FF9. La sortie $\overline{Q}$ de la bascule FF9 est reliée à son entrée D. C'est la sortie $\overline{Q}$ de la bascule FF9 qui donne le signe de la distorsion DS. Ainsi si la sortie $\overline{Q}$ est à "1", ce qui signifie que la bascule FF9 n'a pas encore compté, le signe de la distorsion est négatif car le nombre d'échantillons comptés est inférieur ou égal à 256, si par contre la sortie $\overline{Q}$ est à "0" la bascule FF9 a commencé à compter et le signe de la distorsion est positif car le nombre d'échantillons comptés est supérieur à 256. Enfin toutes les entrées de remise à zéro R des bascules FF1 à FF9 reçoivent le signal de remise à zéro élaboré par la base de temps TB.

La base de temps TB élabore chaque cycle de mesure au moyen d'un compteur asynchrone modulo $2^n$ à n = 9 étages comptant 512 périodes ($2^9$) de l'horloge d'échantillonnage SCK et d'un circuit de remise à zéro remettant à zéro les bascules du circuit DM par l'intermédiaire du signal de sortie RS après chaque cycle de mesure du signe de la distorsion (512 périodes de SCK). Neuf bascules FF10 à FF18 de type D sont montées en cascade. A l'entrée d'horloge de la bascule FF10 est appliquée l'horloge d'échantillonnage SCK. Pour les bascules FF10 à FF18 et pour un indice i variant de 10 à 18 la sortie $\overline{Q}$ d'une bascule FFi est d'une part reliée à son entrée D et d'autre part reliée à l'entrée d'horloge de la bascule suivante FFi + 1. La sortie Q de la bascule FF18 qui est à "1" lorsque 512 périodes de l'horloge d'échantillonnage SCK ont été comptées est reliée au circuit de remise à zéro. Le circuit de remise à zéro est constitué de deux bascules de type D FF19 et FF20, d'une porte NA2 de type NON-ET et d'un circuit inverseur I1. La sortie Q de la bascule FF18 est reliée à l'entrée D de la bascule FF19 dont la sortie Q est elle-même reliée à l'entrée D de la bascule FF20, alors que l'horloge d'échantillonnage SCK est appliquée aux entrées d'horloge desdites bascules FF19 et FF20. La sortie $\overline{Q}$ de la bascule FF19 est reliée à une première entrée de la porte NA2 de type NON-ET à deux entrées dont la deuxième entrée est reliée à la sortie Q de la bascule FF20. La sortie de la porte NA2 est connectée à l'entrée du circuit inverseur I1 présentant à sa sortie le signal de remise à zéro RS. En effet lorsque la sortie Q de la bascule FF18 est à "1", c'est à dire lorsqu'il a été compté 512 périodes d'échantillonnage, cet état "1" est propagé à l'entrée de la bascule FF19 puis à l'entrée de FF20. Au coup d'horloge d'échantillonnage suivant la sortie Q de la bascule FF19 passe à "0" et donc la sortie $\overline{Q}$ à "1" alors que la sortie Q de la bascule FF20 est toujours à "1", la sortie du circuit N2 présente l'état "0" puisque ces deux entrées sont à "1" et donc le signal de sortie RS du circuit inverseur I1 présente l'état "1" jusqu'au prochain coup d'horloge d'échantillonnage. Ainsi est réalisée une impulsion de remise à zéro des bascules du circuit de mesure de la distorsion DM. Le signal de sortie RS est d'autre part appliqué à une entrée du circuit compteur de corrections UDC.

Le circuit compteur de corrections UDC est constitué d'une part d'un compteur décompteur modulo $2^n$ à n = 4 étages et donc à 16 positions, synchrone du signal de remise à zéro RS et d'autre part d'un circuit de discrimination du signe de la distorsion. Quatre bascules FF21 à FF24 sont montées en cascade en combinaison avec des portes E01 à E08 de type OU exclusif à 2 entrées et des portes A1 à A3 du type ET à 2 entrées assurant la fonction de comptage ou de décomptage alors qu'une cinquième bascule FF25 permet de détecter le signe de la distorsion. Toutes les bascules FF21 à FF25 reçoivent sur leur entrée d'horloge le signal RS, elles sont donc synchrones du signal RS et le contenu du compteur-décompteur ainsi que le signe de la distorsion sont modifiables à chaque impulsion du signal RS c'est à dire après chaque mesure de distorsion. La bascule FF21 de type D a son entrée D reliée à sa sortie $\overline{Q}$ alors que sa partie Q est connectée à une première entrée de la porte OE1 qui reçoit sur sa deuxième entrée le signal DS relatif au signe de la distorsion. La sortie Q de la bascule FF21 est également reliée à la première entrée de la porte OE5 qui est en outre reliée par sa deuxième entrée à la sortie Q de la bascule FF25. Les bascules FF22, FF23, FF24 et FF25 sont du type JK, les entrées J et K de chacune de ces bascules sont reliées entre elles pour former des bascules de type T. Les trois derniers étages de comptage décomptage sont identiques. Ainsi, les sorties Q des bascules FF22, FF23 et FF24 sont respectivement reliées aux premières entrées des portes E02, E03 et E04 ainsi qu'aux premières entrées des portes E06 E07 et E08. Les secondes entrées des portes E02, E03 et E04 reçoivent le signal DS relatif au signe de la distorsion, alors que les secondes entrées des portes E06, E07 et E08 sont reliées à la sortie Q de la bascule FF25. Les sorties des portes E02, E03 et E04 sont respectivement reliées aux premières entrées des portes A1, A2 et A3 dont les secondes entrées sont respectivement reliées aux entrées J et K (reliées entre elles) des bascules FF22, FF23 et FF24. Enfin, les sorties des portes A1, A2 et A3 sont reliées respectivement aux entrées J et K (reliées entre elles) des bascules FF23, FF24 et FF25. Ainsi le résultat de chaque mesure réalisée dans le circuit de mesure DM est exploité dans le compteur-décompteur qui fonctionne en compteur lorsque la distorsion est positive en étant incrémenté, ou qui fonctionne en décompteur lorsque la distorsion est négative en étant décrémenté. Les sorties de chacun des 4 étages et donc dans l'ordre de poids croissant les sorties des portes E05, E06, E07 et E08, sont représentatives de la valeur binaire de la distorsion. Les sorties Q et $\overline{Q}$ de la bascule FF25 donnent le signe de la distorsion : distorsion positive pour Q = 1 et $\overline{Q}$ = 0 et distorsion négative pour Q = 0 et $\overline{Q}$ = 1. La valeur binaire ainsi que le signe de la distorsion sont de la sorte directement exploitables, ils peuvent être affichés après un décodage trivial pour fournir la mesure de la distorsion instantanée ou de la distorsion moyenne après comptage sur plusieurs cycles et peuvent être également selon une caractéristique de l'invention utilisés pour annuler ladite distorsion. Pour cela le contenu du compteur de corrections UDC est chargé en mode parallèle dans le circuit monostable à durée variable VOS inclus dans le circuit de correction CC, les valeurs C1, C2, C3 et C4 étant respectivement représentatives des sorties des portes E05, E06, E07 et E08, de même que les signaux DSQ et $\overline{DSQ}$ présentés par les sorties Q et $\overline{Q}$ de la bascule FF25 représentatifs du signe de la distorsion sont transmis vers deux entrées du circuit de correction CC.

Dans le circuit de correction CC, le signal susceptible d'être distordu NCS est appliqué à l'entrée d'une bascule FF26 de type D qui reçoit sur son entrée d'horloge l'horloge d'échantillonnage SCK. Le signal NCS est ainsi automatiquement synchronisé sur l'horloge SCK. La sortie Q de la bascule FF26 est reliée à une première entrée d'une porte A4 de type ET à 2 entrées qui reçoit sur sa deuxième entrée le signal DSQ émis par le circuit UDC. La sortie $\overline{Q}$ de la bascule FF26 est reliée à une première entrée d'une porte A5 de type ET à 2 entrées qui reçoit sur sa deuxième entrée le signal $\overline{DSQ}$ émis par le circuit UDC. Les sorties des portes A4 et A5 sont respectivement reliées à la première et à la deuxième entrée d'une porte NR1 de type NON-OU à 2 entrées. A la sortie de la porte NR1 est reproduit le signal de la sortie Q de la bascule FF26 lorsque le signal DSQ = 0, alors qu'est reproduit le signal de la sortie $\overline{Q}$ de la bascule FF26 lorsque le signal DSQ = 1, ce qui permet de discriminer le signe de la distorsion.

Afin de permettre la correction de la distorsion le circuit monostable à durée variable VOS est inclus dans le circuit de correction CC. Le circuit doit pour cela fournir des impulsions dont la durée est proportionnelle à la valeur contenue dans le compteur de corrections UDC et donc proportionnelle à la valeur de la distorsion biaise. Lorsque la distorsion biaise est positive, les éléments binaires "0" sont plus courts que les éléments binaires "1", inversement si la distorsion est négative, les éléments binaires "1" sont plus courts que les éléments binaires "0". Le signe étant discriminé, le monostable prolonge les "0" dans le cas d'une distorsion positive ou les "1" dans le cas d'une distorsion négative pour corriger le signal distordu. Le circuit VOS est en fait un compteur asynchrone modulo $2^n$ à n = 4 étages qui permet de rajouter jusqu'à 15 échantillons en décrivant des cycles dont les durées sont calibrées en fonction du chargement du contenu du compteur de corrections UDC. Pour cela les sorties des portes E05, E06, E07 et E08 du circuit UDC ayant pour valeur respective C1, C2, C3 et C4 sont respectivement reliées aux premières entrées des portes NR2, NR3, NR4 et NR5 de type NON-OU à 2 entrées dont les secondes entrées sont reliées à la sortie de la porte NR1. Les 4 étages du compteur du circuit VOS sont chacun constitués d'une bascule FF27, FF28, FF29 et FF30 de type D dont les sorties $\overline{Q}$ sont chacune reliées à leur entrée D. Les sorties des portes NR2, NR3, NR4 et NR5 sont respectivement reliées aux entrées S de mise à 1 des bascules FF27, FF28, FF29 et FF30 pour forcer le contenu du compteur UDC dans le compteur du circuit VOS. La sortie $\overline{Q}$ de la bascule FF27 est reliée à l'entrée d'horloge de la bascule FF28 ainsi qu'à une première entrée d'une porte NA3 de type NON-ET à 4 entrées. La sortie $\overline{Q}$ de la bascule FF28 est reliée à l'entrée d'horloge de la bascule FF29 ainsi qu'à la seconde entrée de la porte NA3. La sortie $\overline{Q}$ de la bascule FF29 est reliée à l'entrée d'horloge de la bascule FF30 ainsi qu'à la troisième entrée de la porte NA3. Enfin la sortie $\overline{Q}$ de la bascule FF30 est reliée à la quatrième entrée de la porte NA3. La sortie de la porte NA3 qui est donc la sortie du circuit VOS est reliée à une première entrée d'une porte NA4 de type NON-ET à 3 entrées dont la seconde entrée est reliée à la sortie de la porte NR1 et la troisième entrée est reliée à la sortie d'un inverseur I2 recevant à son entrée et inversant donc le signal d'horloge d'échantillonnage SCK. La sortie de la porte NA4 est reliée à l'entrée d'horloge de la bascule FF27. Ainsi lorsque le compteur est chargé à la valeur du contenu du compteur UDC, il commence à décompter de cette valeur jusqu'à 0 puis se bloque. Ce temps de décomptage correspond au nombre d'échantillons à ajouter aux éléments binaires pour les corriger de leur distorsion. La sortie de la porte NA3 est de plus reliée à l'entrée d'un inverseur I3 qui produit donc la valeur "1" lorsque le compteur VOS est bloqué. La sortie de l'inverseur I3 est reliée à une première entrée d'une porte NA5 de type NON-ET à 2 entrées dont la seconde entrée reçoit le signal de sortie de la porte NR1. A la sortie de la porte NA5 est recopié le signal de sortie de la porte NR1 corrigé en tout ou partie de sa distorsion par addition du nombre d'échantillons imposés. La sortie de la porte NA5 est reliée à une première entrée d'une porte ENR1 de type NON-OU exclusif à 2 entrées dont la seconde entrée reçoit le signal DSQ. Le signal CS à la sortie de la porte ENR1 est la recopie du signal NCS corrigé en tout ou partie de sa distorsion. Le signal CS qui est donc le signal de sortie du dispositif BDC est réanalysé dans le circuit DM de mesure de la distorsion, les corrections s'effectuant jusqu'à l'annulation de la distorsion, le dispositif BDC étant ainsi asservi, mesure et annulation étant effectuées cycliquement.

Le dispositif ainsi décrit peut démarrer dans n'importe quelle position de comptage, il finit toujours par converger. Cependant, s'il est désiré de commencer le comptage à la valeur 0 un signal de remise à zéro général GR peut être appliqué aux entrées de remise à zéro R des bascules FF10 à FF25. Ce signal et les différentes liaisons auxquelles il est susceptible d'être appliqué sont représentés en pointillé sur le schéma de la figure 3.

Il est, en outre, à noter qu'un tel dispositif, de par sa simplicité, est aisément intégrable, ce qui est un important avantage technologique. En effet, il comporte un nombre limité de composants électroniques et se prête ainsi particulièrement bien à l'intégration monolithique, en outre il ne nécessite qu'un nombre réduit d'accès : 2 bornes d'alimentation, 1 borne d'entrée des données (non corrigées), 1 borne de sortie des données (corrigées ou en voie de l'être), 1 borne d'entrée d'horloge d'échantillonnage et de manière optionnelle une borne d'entrée de signal de remise à zéro général.

## Revendications

1. Dispositif de mesure de la distorsion biaise présente dans des signaux binaires élaboré autour de moyens de comptage comptant les éléments binaires pendant une période de mesure déterminée par une horloge de comptage caractérisé en ce que pour des signaux binaires du type ne comportant pas de composante spectrale à la fréquence zéro, c'est à dire comportant autant d'éléments binaires à l'état "0" que d'éléments binaires à l'état "1", il effectue automatiquement par asservissement d'une part, la mesure de la distorsion biaise par analyses successives desdits signaux binaires dont les éléments binaires sont échantillonnés à une fréquence multiple de la fréquence des signaux analysés pour déterminer, pour un nombre d'échantillons significatifs comptés par les moyens de comptage pendant la période de mesure déterminée, le signe et la valeur quantifiée de la distorsion et d'autre part la correction de ladite distorsion par l'intermédiaire de moyens d'annulation de la distorsion biaise qui lui sont à cet effet associés en augmentant la durée des éléments binaires proportionnellement à la valeur quantifiée de la distorsion mesurée, le signe des éléments binaires dont la durée est à augmenter étant déterminé par le signe de la distorsion mesurée, les signaux ainsi corrigés étant alors réanalysés et de nouveau corrigés si besoin est jusqu'à l'annulation de leur distorsion.

2. Dispositif de mesure de la distorsion biaise selon la revendication 1 caractérisé en ce que les moyens de comptage sont composés d'un circuit de mesure de la distorsion et d'un circuit compteur de corrections, le circuit de mesure de la distorsion constitué d'un compteur binaire analysant le signal au rythme de la fréquence d'échantillonnage et discriminant le signe de la distorsion pour une période de mesure déterminée et le circuit compteur de corrections constitué d'un compteur-décompteur donnant le signe et la valeur quantifiée de la distorsion biaise.

3. Dispositif de mesure de la distorsion biaise selon l'une des revendications 1 à 2 caractérisé en ce que l'horloge de comptage est une base de temps constituée d'un compteur binaire comptant au rythme de la fréquence d'échantillonnage pendant une période de mesure déterminée et d'un circuit deremise à zéro pour remettre à zéro les moyens de comptage au bout de la période de mesure déterminée.

4. Dispositif de mesure de la distorsion biaise selon l'une des revendications 1 à 3 caractérisé en ce que les moyens d'annulation qui lui sont associés sont composés d'un circuit de correction comportant un circuit monostable à durée variable constitué d'un compteur chargé à la valeur quantifiée de la distorsion pour augmenter la durée des éléments binaires affectés de distorsion biaise proportionnellement à la valeur quantifiée de la distorsion en accord avec le signe de la distorsion, la sortie du circuit de correction recopiant les signaux binaires après remise en forme et correction de la distorsion.

FIG. 1

FIG. 2

2 —Ⅲ—PHF 88-520

FIG.3

EP 0 337 545 A1

3-III-PHF 88-520

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 218 161 (BBC) <br> * Résumé; page 9, lignes 22-25 * <br> --- | 1-3 | H 04 L 11/12 <br> H 04 L 1/20 |
| A | US-A-4 675 545 (TAKAHASHI) <br> * Résumé * <br> --- | 1-3 | |
| A | IBM TECHNICAL DISCLOSURE BULLETIN, vol. 29, no. 3, août 1986, pages 1417-1420, New York, US; "Corrective duty-cycle decoder for infrared Manchester data transmission" <br> * En entier * <br> ----- | 1-4 | |

DOMAINES TECHNIQUES RECHERCHES (Int. Cl.4)

H 04 L

Le présent rapport a été établi pour toutes les revendications

| Lieu de la recherche | Date d'achèvement de la recherche | Examinateur |
|---|---|---|
| LA HAYE | 06-07-1989 | MIKKELSEN C. |